# EUROPEAN PATENT APPLICATION

(11) **EP 2 325 228 A1**
(43) Date of publication of application: **25.05.2011**
(21) Application number: 10014367.6
(22) Date of filing: 08.11.2010
(51) Int. Cl.: C08G 63/21, C08G 63/47

(54) **An aliphatic-aromatic copolyster, the preparation method and the use thereof**

(30) Priority: 09.11.2009 CN 200910211272
(71) Applicant: Zhejiang Hangzhou Xinfu Pharmaceutical Co. Ltd, Zhejiang 311300 (CN)
(72) Inventor: Dai, Qingwen, Hangzhou City Zhejiang Province 311300 (CN); Jiang, Kai, Hangzhou City Zhejiang Province 311300 (CN); Lin, Guanyu, Hangzhou City Zhejiang Province 311300 (CN); Guo, Xinfu, Hangzhou City Zhejiang Province 311300 (CN); Bai, Yanbing, Hangzhou City Zhejiang Province 311300 (CN); Wang, Kang, Hangzhou City Zhejiang Province 311300 (CN); Liu, Zhaotao, Hangzhou City Zhejiang Province 311300 (CN); Sun, Xiaofeng, Hangzhou City Zhejiang Province 311300 (CN)
(74) Representative: Rhein, Alain

(57) **Abstract**

This invention provides an aliphatic-aromatic copolyester and the preparation and use thereof, and the polymeric monomers comprise compounds selected from aliphatic diacids, naphthenic diacids or the esters, anhydrides, acyl halides thereof; compounds selected from aromatic diacids or the esters, anhydrides, acyl halides thereof; compounds selected from compounds with two functional groups selected from amino groups, mercapto groups or hydroxyl groups, or the derivatives thereof with epoxys, nitrogen-containing heterocyclic rings or sulfur-containing heterocyclic rings; compounds selected from unsaturated acids with at least one carbon-carbon, carbon-oxygen, carbon-nitrogen, or carbon-sulfur double bonds, carbon-carbon or carbon-nitrogen triple bonds or the esters, anhydrides, acyl halides thereof; compounds selected from unsaturated alcohols with at least one carbon-carbon double bonds or carbon-carbon triple bonds or the epoxy derivatives thereof; the aliphatic-aromatic copolyester is obtained by mixing the foregoing polymeric monomers, followed by esterification, condensation polymerization; then polymerizing, grafting and/or coupling the double bonds and/or triple bonds of the monomers with an initiating agent.

## Description

The present application claims the priority of Chinese Patent Application No. 2009102111272.5, filed on November 9, 2009, entitled, "An aliphatic-aromatic copolyester, the preparation method and the utilization thereof ", the content of which is incorporated herein by reference.

### Technical Field

The invention relates to an aliphatic-aromatic copolyester, the preparation method and the use thereof, and particularly relates to a biodegradable aliphatic-aromatic copolyester with high molecular weight, the preparation method and the use thereof.

### Background Art

Currently, the polymer materials have been deeply involved in various fields of human lives. Besides the convenience brought to people, it has brought a problem to be settled ----"the White pollution". Lately, most of the polymer material in use are not degradable in the environment over a long period of time and remained in the environment in large qualities after being used, which results in increasing pressure to the environment year by year, damages to the environment of the earth and negative effect on the recycling and reusing of resources. The environment-friendly biodegradable polymer material has attracted more and more attention on the attention of human beings for their own living environments.

The ester bonds exist in the backbones of polyester polymer materials and have similarity to the ester bonds existing broadly in nature (such as those in fat, lipid and etc.), which have been considered as one of the important trend for an ideal biological degradable material. However, it has been found in actual use that aromatic homopolyesters, such as polyethylene terephthalate (PET), polybutylene terephthalate (PBT), and polytrimethylene terephthalate (PTT) are substantially not degradable in nature, and can resist the erosion of bacteria. In nature environment, such aromatic polyesters are also not sensitive to hydration. The working life of PET may be as long as 16-48 years and PET fiber can last 30 years in human body. Aliphatic polyester has been attracting more attention for its good biocompatibility, biodegradability, and non-toxicity and so on. They can be broadly applied in the fields like biomedical materials, fiber materials and injection articles. Nevertheless, there are some disadvantages for aliphatic polyesters when using, such as higher prices, lower melting point, relatively poor mechanic properties, easy to hydrolysis and aging and the like, which have restricted the application of aliphatic polyesters in certain fields. Combining the characters of aromatic polyesters and aliphatic polyesters to form a new aliphatic-aromatic copolyester with proper prices, outstanding properties, and biodegradable properties has been one of the focal points in the development of degradable polyester materials.

In recent years, some of aliphatic-aromatic copolyesters have been commercial available in foreign countries, mainly including Ecoflex of Basf Company in Germany, Eastar Bio of Eastman company in U.S., and the like. Besides two polyesters which have been commercial available by Basf Company and Eastman Company, other companies have developed some aliphatic-aromatic copolyesters. China petroleum & Chemical Corporation has developed one biodegradable liner random aliphatic-aromatic copolyester. Cheil Synthetics Inc. has developed one aliphatic-aromatic copolyester with block structure.

In conclusion, although in the market there are aliphatic-aromatic copolyesters commercial available, there still exists a need to improve the molecular structure or preparation process of the above mentioned aliphatic-aromatic copolyesters in order to simplify the complexity of preparation process, optimize the molecular structures for enhancing the application properties or remove the solvent with low molecular weight and chain extender for avoiding affecting the product application.

### Description of The Invention

The term "biodegradable" used herein refers to under the effect of microorganism or enzymes, an organic compound is degraded by microorganism or enzymes to carbon dioxide, water or methane, and the elements thereof-containing mineralized inorganic salts, as well as new biomass.

The term"latent unsaturated bonds" used herein refers to means the unsaturated bonds in the molecule structure substantially keep stable in normal esterification, condensation polymerization process without polymerization, coupling or grafting reaction, while under specified conditions the unsaturated bonds could be opened, and polymerization, coupling or grafting reaction will occur.

The aim of the invention is to obtain a biodegradable aliphatic-aromatic copolyester with high molecular weight and branched structure.

The technical solution to achieve the aim of the present invention is as follows:
an aliphatic-aromatic copolyester, the polymeric monomers of which comprise:
   (A) one or more compounds selected from aliphatic diacids, naphthenic diacids or the esters, anhydrides, acyl halides thereof;
   (B) one or more compounds selected from aromatic diacids or the esters, anhydrides, acyl halides thereof;
   (C) one or more compounds with two functional groups selected from amino groups, mercapto groups or hydroxyl groups; or the derivatives thereof with epoxy groups, nitrogen-containing heterocyclic rings or sulfur-containing heterocyclic rings;
   (D) one or more compounds selected from (D1) the unsaturated acids with at least one carbon-carbon, carbon-oxygen, carbon-nitrogen, or carbon-sulfur double bonds, carbon-carbon or carbon-nitrogen triple bonds or the esters, anhydrides, acyl halides thereof; or (D2) the unsaturated alcohols with at least one carbon-carbon double bonds or carbon-carbon triple bonds or the epoxides thereof.

The aliphatic-aromatic copolyester is formed by mixing the above mentioned polymeric monomers for successive esterification, condensation polymerization reaction, and then undergoing polymerization, grafting and/or coupling reaction on the double and/or triple bonds of the polymeric monomer (D) with an initiating agent.

The molar ratio of the hydroxyl, amino and/or mercapto groups to carboxyl groups in the polymeric monomer of the above mentioned aliphatic-aromatic copolyester is 0.5-5:1. Specifically, the molar ratio of polymeric monomer (A), (B) and (D1) is (10~95) : (5~95) : (0~10), and the ratio of the molar sum of polymeric monomer (C) and (D2) to the molar sum of polymeric monomers is (0.01~10):100, preferably (0.01-5):100.

The number average molecular weight of above mentioned aliphatic-aromatic copolyester is 10,000~200, 000g/mol; the molecular weight distribution index is 1.1~5, preferably 1.5~4. The melting point of the above mentioned aliphatic-aromatic copolyester is 15~195°C and the glass transition temperature is -80~120°C.

The above mentioned polymeric monomer (A) can be selected from C₂~C₃₀ aliphatic diacids and C₅~C₂₀ naphthenic diacids, preferably selected from C₂~C₁₀ aliphatic diacids and C₅~C₁₀ naphthenic diacids, more preferably selected from C₂~C₆ aliphatic diacids and C₅~C₈ naphthenic diacids, such as one or more compounds selected from malonic acid, succinic acid, glutaric acid, adipic acid, pimelic acid, suberic acid, azelaic acid, sebacic acid, 2,3-dimethyl- glutaric acid, diglycolic acid, 2,5-norbornane dicarboxylic acid, cyclohexane-1,3-dicarboxylic acid, cyclohexane-1,4-dicarboxylic acid or the esters, anhydrides, acyl halides thereof, most preferably selected from succinic acid, adipic acid, cyclohexane-1,4-dicarboxylic acid or sebacic acid.

The above mentioned polymeric monomer (B) can be selected from C₈~C₂₀ aromatic diacids, preferably selected form C₈~C₁₂ aromatic diacids, more preferably selected form C₈ aromatic diacids, such one or more compounds selected from terephthalic acid, isophthalic acid, phthalic acid, biphenyl dicarboxylic acid, 2,6- naphthalene dicarboxylic acid or 1,5-naphthalenedicarboxylic acid, or the esters, anhydrides, acyl halides thereof, most preferably selected from terephthalic acid, isophthalic acid, 2,6-naphthalene dicarboxylic acid, or the esters, anhydrides, acyl halides thereof.

The corresponding alcohols in the esters in the above mentioned polymeric monomer (A) or (B) may be C₁~C₈ alcohols, preferably C₁~C₆ alcohols, more preferably C₁~C₄ alcohols; the anhydrides may be selected from the anhydrides formed by themselves or mixed anhydrides, preferably the anhydrides formed by themselves; the acyl halides may be selected from acyl chlorides or bromides, preferably acyl chlorides.

The above mentioned polymeric monomer (C) may be one or more compounds selected from diols, amino alcohols, mercapto alcohols, mercapto amines, amino thiols, dithiols, diamine, or derivatives with epoxys, nitro heterocyclic rings, sulfuric heterocyclic rings thereof. Specifically, the polymeric monomer (C) may be selected from small molecule diols, preferably selected from C₂~C₃₀ straight chain or branched chain aliphatic diols, more preferably selected from C₂~C₁₀ straight chain or branched chain aliphatic diols, such as one or more compounds selected from ethylene glycol, 1,2-propanediol, 1,3-propanediol, 1,4-butanediol, 1,2-butanediol, hexanediol, cyclohexane-1,4-dimethanol, or cyclohexane-1,3-dimethanol; polyether diols, preferably selected from polyethylene glycol ethers, polypropylene ethers or polytetrahydrofuran ethers with a polymerization degree of 2~3000, more preferably selected from polyethylene glycol ethers with a polymerization degree of 2~200; polyester diols, preferably one or more compounds selected from the polyesters prepared by C₂~C₃₀ diacids and C₂~C₃₀ diols, more preferably one or more compounds selected from the polyesters prepared by C₂~C₁₀ diacids and C₂~C₂₀ diols with a polymerization degree of 1~10000. The polymeric monomer (C) may also be one or more compounds selected from amino alcohol, diamines or mercapto amines, more preferably one or more compounds selected from C₂~C₂₀ alkamnines, C₂~C₂₀ diamines, wherein polymeric monomer (C) may be C₂~C₃₀ diols alone or a combination of C₂~C₃₀ diols and polyether diols with a polymerization degree of 2~3000, and the compounds with hydroxyl-amino, hydroxyl-mercapto, mercapto-mercapto, amino-mercapto, amino-amino groups, wherein the amount of the polyether diols is generally less than 50wt% of the total amount of polymeric monomer (C), and the amount of the compounds with hydroxyl-amino, hydroxyl-mercapto, mercapto-mercapto, amino-mercapto, amino-amino groups is generally less than 40wt% of the total amount of the polymeric monomer (C). Of course, the amount of polyether diols and the compounds with hydroxyl-amino, hydroxyl-mercapto, mercapto-mercapto, amino-mercapto, amino-amino groups may possibly be higher than the amount mentioned above.

The above mentioned polymeric monomer (D1) may be selected from unsaturated acids with at least one carbon-carbon double bonds or carbon-carbon triple bonds, or the esters, anhydrides, acyl halides thereof, preferably selected from unsaturated acids with at least one carbon-carbon double bonds, or the esters, anhydrides, acyl halides thereof, such as one or more compounds selected from acrylic acid, acryloyl chloride, acryloyl halide, methacrylic acid, methacryloyl chloride, dimethylacrylic acid, vinyl benzoic acid, oleic acid, erucic acid, linoleic acid, linolenic acid, arachidonic acid, fumaric acid, maleic acid, itaconic acid, maleic anhydride, glycidyl acrylate, glycidyl oleate, monoethylene glycol acrylate or monoglyceryl acrylate. More preferably, the polymeric monomer (D1) is one or more compounds selected from acrylic acid, acryloyl chloride, methylacrylic acid, methylacryloyl chloride, oleic acid or erucic acid.

The above mentioned polymeric monomer(D2) may be selected from unsaturated alcohols with at least one carbon-carbon double bond or the epoxy derivative thereof, such as one or more compounds selected from allyl alcohol, oleic alcohol, mustard alcohol, allyl alkoxy polyether, allyl alkoxy glycidyl ether, ally glycidyl ether, oleyl glycidyl ether, allyl monoglyceride, or allyl glyceroether. More preferably, the polymeric monomer (D2) is one or more compounds selected from allyl alkoxy polyether, allyl alkoxy glycidyl ether, allyl glyceroether, ally glycidyl ether or allyl monoglyceride.

The above mentioned initiating agent may be selected from compounds which are capable of initiating polymerization, grafting and/or coupling reactions of carbon-carbon, carbon-oxygen, carbon-nitrogen or carbon-sulfur double bonds, carbon-carbon or carbon-nitrogen triple bonds, such as azo compounds, peroxides, oxidation-reduction systems or oxygen, such as one or more compounds selected from azobis(dimethyl isobutyrate), azobis (isobutylamidine hydrochloride), azodicarbonamide, azobis(isobutylimdazole hydrochloride), azobis(cyclohexylmethyl carbonitrile), azobis(cyanopentanoic acid), azobis(isobutyronitrile), benzoyl peroxide, 2,4-dichlorobenzoyl peroxide, diacetyl peroxide, dioctanoyl peroxide, dilauroyl peroxide; high energy particles which are capable of initiating polymerization, grafting and/or coupling reactions of carbon-carbon, carbon-oxygen, carbon-nitrogen, or carbon-sulfur double bonds, carbon-carbon or carbon-nitrogen triple bonds, such as one or more selected from UV, visible light, plasma, x-ray, γ-ray, heat or electric current, preferably one or more selected from peroxides, azo compounds, UV, γ-ray or heat, more preferably one or more selected from peroxides, azo compounds, UV or heat.

The above mentioned polymeric monomers of the aliphatic-aromatic copolyester can further comprise (E), one or more compounds selected from hydroxyl acids, amino acids or the lactones, lactams, poly (hydroxy acids), poly (amino acids) thereof, such as lactic acid, glycolic acid, hydroxybutyric acid, hydroxyhexanoic acid, caprolactone, glycolide, lactide, lactide-co-glycolide, alanine or glutamic acid; polymers of hydroxyl acids and/or amino acids with a polymerization degree of 2~10000, such as poly(lactic acid), poly (hydroxyl acetic acid), polycaprolactone, lactic acid-hydroxyl acetic acid copolymer, lactic acid-caprolactone copolymer, hydroxyl acetic acid-caprolactone copolymer; polypeptides; proteins. The ratio of the weight of the polymeric monomer (E) and the total amount of the above mentioned polymeric monomer could be (0~50) :100.

The present invention also provides the preparation method of the aliphatic-aromatic copolyester mentioned above, which comprises:
(1) mixing the polymeric monomer (A), (B), (C), (D) and optional (E) for esterification and condensation polymerization reactions;
(2) polymerizing, grafting and/or coupling reacting the double and/or triple bonds of the polymeric monomer (D) with the initiation of an initiating agent.

Preferably, the reaction of step (1) is carried out in the presence of catalysts; preferably, the reaction of step (2) is carried out in a extruder.

In the methods mentioned above, firstly the polymeric monomer (A) or (B) can separately react with (C) to form two different types of esterificated fragments, and then the two types of fragments are mixed and condensation polymerized to form an aliphatic-aromatic copolyester with block structure, and the number of the repeating units of polymeric monomer (B) is 2~50. The polymeric monomer (D1) and/or (D2) could be studded in the fragment formed by polymeric monomer (A) or studded in the fragment formed by polymeric monomer (B), or in both. Besides forming the polyesters with block structure, materials like polymeric monomer (A), (B) and the like could be put into the reaction kettle at the same time for esterification reaction to obtain a random aliphatic-aromatic copolyester. The molecular weight of the aliphatic-aromatic copolyester could be controlled by the degree of vacuum, the reaction temperature, the reaction time, and the added amount of the polymeric monomer (D1) or (D2) (such as unsaturated alcohols or unsaturated acids).

The reaction of step (1) can be carried out in the bulk or in the presence of solvents. The catalysts can be employed in the reaction, such as acids, antimony compounds, tin compounds, germanium compounds, titanium compounds, magnesium compounds or zinc compounds and the like, or the reaction can be free of catalysts. The reaction of step (2) may be carried out in reactors, static mixers, active mixers, or screw extruders for sufficiently mixing, followed by the polymerization, grafting, coupling reactions of the unsaturated bonds. According to different reactants, the reaction temperature of step (1) is -50°C-260°C and the reaction time is 0.2~10 hours, while the reaction temperature of step (2) is 50°C~250°C and the reaction time is 0.2~5 hours.

The present invention provides a use of the above mentioned aliphatic-aromatic copolyesters in molding compounds, binders, paper materials and the products thereof, foaming materials, blends, film products or injection articles.

The above mentioned aliphatic-aromatic copolyesters may be used alone or used with other materials. The so called "other materials" herein mainly comprise the following several types of materials: 1) other biodegradable materials such as aliphatic polyesters (poly lactic acids, poly hydroxyl acetic acids, biopolyesters (PHAs), polycaprolactone, poly(butylene succinate), poly(butylene succinate-adipate), poly(hexylene succinate), polycarbonate and the like), starch, cellulose, lignin, proteins, polypeptides, polysaccharides, chitins, natural rubbers, lipids, PVA as well as paper; 2) inorganic materials, such as talcum powders, conch powders, pearl powders, calcium carbonate, montmorillonite, kaoline, clay and the like; 3) materials which are not biodegradable, such as PE, PP and the like; 4) various kinds of additives, such as stabilizing agents, anti-oxidating agents, dyes, and filler; 5) other types of materials.

Compared with the prior techniques, the invention shows the following advantages:
1. A novel aliphatic-aromatic copolyester with high molecular weight. The present invention combines the condensation polymerization of hydroxyl groups and carboxyl groups with the free radical chain polymerization of unsaturated bonds, and the two reactions are independent. During the preparation process, the polymerization monomer (D) with unsaturated bonds is added into the reaction system during the esterification stage, and the unsaturated bonds are thus distributed in the intermediate products uniformly, avoiding the dispersion problems when adding chain extender into the system with high viscosity in the prior art (such as Basf company), and thereby the partial gel will not form in the obtained product, and the product is more uniform. During the condensation polymerization reaction, the latent unsaturated bonds are substantially stable. No effective functional groups take part in forming branches, thus avoiding problems like excess cross-linking, too short molecular chains between the cross-linking points and so on, which then affects the properties of products in the prior art (such as in Eastman company).
2. The products with ultra high molecular weight
   In the present invention, in the late period of the reaction, the molecule chain is extended by initiating reactions like polymerization, grafting reaction, and coupling reaction and so on of the latent unsaturated bonds in the polymerization monomer (D) of the intermediate product, which has changed the method to increase the molecular weight by diffusion or removal of small molecules in the materials with high viscosity as described in traditional condensation polymerization, and has thus overcome the kinetic limitations during the diffusion of small molecules and aliphatic-aromatic copolyesters with ultra high molecular weight can be obtained.
3. The outstanding comprehensive properties of the aliphatic-aromatic copolyesters according to the present invention In the present invention, the distribution problems of chain extender in the polymer have been settled, and the condensation polymerization reaction of alcohols and carboxylic acids is independent with the polymerization, grafting reaction, and coupling reaction and so on in the unsaturated bonds, therefore, the branching/crosslink degree and the length of the molecular chains between the cross-linking points can be independently controlled by controlling the degree of the condensation polymerization reaction of alcohols and carboxylic acids and the density of the unsaturated bonds introduced. Moreover, the unsaturated bonds in the polymerization monomer (D) of the intermediate may form multiple structure patterns like branching, coupling, interpenetrating networks and so on by the polymerization, grafting reactions, and coupling reaction and the like, and make the material have good tensile strength, elongation at break, and notched impact strength, and fit multiple processing methods like blow molding, extrusion molding, injection molding, foaming and coating and so on.
4. The products with high purity and broader application
   In the present invention, the polymerization, grafting reaction and coupling reaction and so on could be initiated with light, heat, and radiation and so on without adding chain extender. Therefore there is no problem on chain extender residue, and the product with high purity is obtained for using in the field of packing of foodstuff and medicine.
5. The method of this invention is suitable for preparing polyesters with an aliphatic-aromatic ratio of 5~100:95:0, and the obtained polyester product shows good biodegradable properties, and may degrade over 60% within 90 days upon aerobic composting.

### Preferred Embodiments of The Invention

The technical solutions according to the present invention have been further described and proved by Examples 1-16, which are only intended to be illustrative but can not be considered as the limitation of the invention.

Gel Chromatography is employed to determine the molecular weight of the polymer, and tetrahedron furan is employed as the solvent. The measurement is carried out on a Waters-208 instrument and the molecular weight is calibrated with a standard sample of polystyrene.

In the biodegradation experiments, the released amount of the carbon dioxide is measured to determine the final aerobic biodegradation ability under controlled composting conditions. The polymer testing samples is mixed with the culture soil, and introduced into the static composting container. The composting container is placed in the experimental environment of 58±2°C, and saturated carbon dioxide-free air is employed for aeration. The aeration air is introduced into an absorption instrument containing NaOH. After absorbing with NaOH solution, the solved inorganic carbon is analyzed at regular intervals to give the totally released carbon dioxide. The composting container is shaken every week to avoid hardening and to make sure the microorganism contacts with the testing samples sufficiently.

GB-T17037.1-1997, GB/T 1040-2006, IS02818.1994 and GB/T 1843-2008/ISO 180:2000 have been taken as standards in the sample preparation for testing the tensile properties and impact resistance of the polymer.

### Example 1

1000mL of chloroform, 507.5g of terephthaloyl dichloride and 387.5g of butanedioyl chloride are charged into a reaction vessel and stirred until being mixed homogeneously, and then a mixture of 450g of butanediol and 11. 6g of monoethylene glycol acrylate is added by drop while stirring. The reaction temperature is controlled to be 0~40°C. After the addition by drop, the stirring continues for 60 minutes to make the reaction sufficiently. The hydrogen chloride produced in the reaction is absorbed with NaOH solution.

Upon the completion of the reaction, the chloroform is removed by distillation, and 0.5~1g of tetrabutyl titanate is added. Then the reaction mixture is sufficiently stirred for 20 minutes after melting, and nitrogen is pumped in to replace the air in the vessel. The pressure is reduced to 100~1000 Pa, and the temperature is successively increasing to 180~250°C. The mixture is allowed to react for 60~120 minutes with stirring and polymer 1 with light yellow-to-white color is obtained. As determined with GPC method the molecular weight Mn is 653, 000, and Mw is 1, 404, 000, and the molecular weight distribution index is 2.15.

### Example 2

1000mL of chloroform, 507.5g of terephthaloyl chloride, 387.5g of butanedioyl chloride and 4.5g of acryloyl chloride are charged into a reaction vessel and stirred until being mixed homogeneously, and then a mixture of 62g of glycol, 270g of butanediol, 95g of hexanediol and 80g of polyethylene glycol is added by drop while stirring. The reaction temperature is controlled to be 0~40°C. After the addition by drop, the stirring continues for 60 minutes to make the reaction sufficiently. The hydrogen chloride produced in the reaction is absorbed with NaOH solution.

Upon the completion of the reaction, the chloroform is removed by distillation, and 0.5~1g of tetrabutyl titanate is added. Then the reaction mixture is stirred for 20 minutes, and nitrogen is pumped in to replace the air in the vessel. The pressure is reduced to 100-1000 Pa, and the temperature is successively increasing to 180~250°C. The mixture is allowed to react for 60~120 minutes and polymer 2 with light yellow-to-white color is obtained. As determined with GPC method, the molecular weight Mn is 582,000, Mw is 1,345,000, and the molecular weight distribution index is 2.31.

### Example 3

1000mL of chloroform, 507.5g of terephthaloyl chloride, 457.5g of butanedioyl chloride and 4.5g of acryloyl chloride are added into a reaction vessel and stirred until be mixed homogenously, and then a mixture of 441g of butanediol and 100g of polyethylene glycol is charged by drop while stirring, and the reaction temperature is controlled to be 0~40°C. After the addition by drop, the stirring continues for 60 minutes to make the reaction sufficiently. The hydrogen chloride produced in the reaction is absorbed with NaOH solution.

Upon the completion of the reaction, the chloroform is removed by distillation, and 0.5~1g of tetrabutyl titanate is added. Then the reaction mixture is sufficiently stirred for 20 minutes after melting, and nitrogen is pumped in to replace the air in the vessel. The pressure is reduced to 100~1000 Pa, and the temperature is successively raised to 180~250°C. The mixture is allowed to react for 60~120 minutes with stir and polymer 3 with a color of light yellow to white is obtained. As determined with GPC method, the molecular weight Mn is 496,000, and Mw is 1,379,000, and the molecular weight distribution index is 2.78.

### Example 4

40g of allyl polyethylene glycol ether, 810g of butanediol, 332g of terephthalic acid, 438g of adipic acid and 3g of tetrabutyl titanate are charged into a reaction vessel and stirred until be mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 3~6 hours to obtain A-4.

500g of A-4 is added into a reaction vessel, and heated until the mixture is melted. 0.5~3g of tert-butyl hydroperoxide is added, and stirred until being mixed homogeneously. Then the mixture is heated to 180~260°C and allowed to react for 0.2~4 hours to obtain polymer 4. As determined with GPC method, the molecular weight Mn is 432,000, Mw is 1, 356, 000, and the molecular weight distribution index is 3.14.

### Example 5

40g of allyl polyethylene glycol ether, 540g of butanediol, 152g of propylene glycol, 166g of terephthalic acid, 584g of adipic acid and 3g of tetrabutyl titanate are charged into a reaction vessel and stirred until mixing homogeneously, and heated to 200~250°C, and then the water produced in the esterification is collected. A supplement of 2 g tetrabutyl titanate is added until there is no water produced in the esterification, and the mixture is stirred until being mixed homogeneously. The pressure is reduced to 6000~30Pa and the mixture is allowed to react 3~6 hours to obtain A-5.

500g A-5 is added into a reaction vessel, and heated until A-5 is melted. 0.5~3g of benzoyl peroxide is added, and stirred until being mixed homogeneously. Then the mixture is heated to 80~150°C and allowed to react for 0.2~4 hours to obtain polymer 5. As determined with GPC method, the molecular weight Mn is 479,000, Mw is 1,447,000, and the molecular weight distribution index is 3.03.

### Example 6

13.42g of oleic alcohol, 450g of butanediol, 438g of hexanediol, 216g of 2,6-naphthalenedicarboxylic acid, 584g of succinic acid, and 3g of tetrabutyl titanate are charged into a reaction vessel and stirred until being mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 3~6 hours to obtain A-6.

500g of A-6 is added into a reaction vessel, and heated until A-6 is melted. 0.5~3g of tert-butyl hydroperoxide is added, and stirred until being mixed homogeneously. Then the mixture is heated to 180~260°C and allowed to react for 0.2~4 hours to obtain polymer 6. As determined with GPC method, the molecular weight Mn is 389,000, Mw is 1,144, 000, and the molecular weight distribution index is 2.94.

### Example 7

16.2g of mustard alcohol, 810g of butanediol, 166g of terephthalic acid, 108g of naphthalenedicarboxylic acid, 365g adipic acid, 177g succinic acid, and 3g tetrabutyl titanate are charged into a reaction vessel and stirred until being mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 3~6 hours to obtain A-7.

500g A-7 is added into a reaction vessel, and heated until A-7 is melted. 0.5~3g of tert-amyl hydroperoxide is added, and stirred until being mixed homogeneously. Then the mixture is heated to 130~180°C and allowed to react for 0.2~4 hours to obtain polymer 7. As determined with GPC method, the molecular weight Mn is 432, 000, Mw is 1, 374, 000, and the molecular weight distribution index is 3.18.

### Example 8

3g of allyl alcohol, 105g of 2,2-dimethyl-1,3-propanediol, 720g of butanediol, 332g of terephthalic acid, 354g of succinic acid, and 3g of tetrabutyl titanate are charged into a reaction vessel and stirred until being mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 3~6 hours to obtain A-8.

500g of A-8 is added into a reaction vessel, and heated until A-8 is melted. 0.5~3g of tert-butyl hydrperoxide is added, and stirred until being mixed homogeneously. Then the mixture is heated to 130~200°C and allowed to react for 0.2~4 hours to obtain polymer 8. As determined with GPC method, the molecular weight Mn is 426,000, Mw is 1,376,000, and the molecular weight distribution index is 3.23.

### Example 9

25g of allyl poly(ethylene glycol) glyceryl ether, 720g of butanediol, 332g of terephthalic acid, 354g of succinic acid, and 3g of tetrabutyl titanate are added into a reaction vessel and stirred until being mixed homogeneously, and heated to 200~250°C, and then the water produced in the esterification is collected. A supplement of 2 g tetrabutyl titanate is added after there is no water produced in the esterification, and the mixture is stirred until being mixed homogeneously. The pressure is reduced to 6000~30Pa and the mixture is allowed to react 3~6 hours to obtain A-9.

500g of A-9 is added into a reaction vessel, and heated until A-8 is melted. 0.5~3g of tert-butyl hydrperoxide is added, and stirred until being mixed homogeneously. Then the mixture is heated to 130~200°C and allowed to react for 0.2~4 hours to obtain polymer 9. As determined with GPC method, the molecular weight Mn is 826,000, Mw is 2, 990, 000, and the molecular weight distribution index is 3.62.

### Example 10

5.7g of ally glycidyl ether, 810g of butanediol, 166g of terephthalic acid, 108g of naphthalenedicarboxylic acid, 365g of adipic acid, 177g of succinic acid, and 3g of tetrabutyl titanate are charged into a reaction vessel and stirred until being mixed homogeneously, and heated to 200~250°C, and then the water produced in the esterification is collected. A supplement of 2 g tetrabutyl titanate is added until there is no water produced in the esterification, and the mixture is stirred until being mixed homogeneously. The pressure is reduced to 6000~30Pa and the mixture is allowed to react 5~8 hours to obtain A-10.

500g of A-10 is added into a reaction vessel, and heated until A-10 is melted. 0.5~3g tert-butyl hydroperoxide is added, and stirred until being mixed homogenously. Then the mixture is heated to 180~260°C and allowed to react for 0.2~4 hours to obtain polymer 9. As determined with GPC method, the molecular weight Mn is 1,037,000, Mw is 3,650,000 and the molecular weight distribution index is 3.52.

### Example 11

3.5g of glycidyl methylacrylate, 630g of butanediol, 236g of hexanediol, 166g of terephthalic acid, 108g of naphthalenedicarboxylic acid, 311g of adipic acid, and 3g tetrabutyl titanate are charged into a reaction vessel and stirred until being mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 4~8 hours to obtain polymer 11. As determined with GPC method, the molecular weight Mn is 1,242,000, Mw is 3,925,000, and the molecular weight distribution index is 3.16.

### Example 12

3.5g of glycidyl methylacrylate, 810g of butanediol, 100g of polyethylene glycol, 166g of terephthalic acid, 584g of adipic acid, and 3g of tetrabutyl titanate are charged into a reaction vessel and stirred until being mixed homogeneously, and heated to 200~250°C, and then the water produced in the esterification is collected. A supplement of 2 g tetrabutyl titanate is added until there is no water produced in the esterification, and the mixture is stirred until being

mixed homogeneously. The pressure is reduced to 6000~30Pa and the mixture is allowed to react 4~8 hours to obtain polymer 12. As determined with GPC method, the molecular weight Mn is 1,002,000, Mw is 3, 014, 000, and the molecular weight distribution index is 3.01.

### Example 13

5.7g of ally glycidyl ether, 810g of butanediol, 100g of polyethylene glycol, 332g of terephthalic acid, 365g of adipic acid, 177g of succinic acid, and 3g of tetrabutyl titanate are charged into a reaction vessel and stirred until being mixed homogeneously, and heated to 200~250°C, and then the water produced in the esterification is collected. A supplement of 2 g tetrabutyl titanate is added until there is no water produced in the esterification, and the mixture is stirred until being mixed homogeneously. The pressure is reduced to 6000~30Pa and the mixture is allowed to react 3~6 hours to obtain A-13.

500g A-13 is added into a reaction vessel, and heated until it is melted. 0.5~3g of tert-butyl peroxide is added, and stirred until being mixed homogeneously. Then the mixture is heated to 180~260°C and allowed to react for 0.2~4 hours to obtain polymer 13. As determined with GPC method, the molecular weight Mn is 702,000, Mw is 263,4000, and the molecular weight distribution index is 3.75.

### Example 14

3.5g of glycidyl methylacrylate, 810g of butanediol, 200g of glycolic acid, 166g of terephthalic acid, 584g of adipic acid, and 3g of tetrabutyl titanate are charged into a reaction vessel and stirred until being mixed homogeneously, and heated to 200~250°C, and then the water produced in the esterification is collected. A supplement of 2 g tetrabutyl titanate is added until there is no water produced in the esterification, and the mixture is stirred until being mixed homogeneously. The pressure is reduced to 6000~30Pa and the mixture is allowed to react 4~8 hours to obtain polymer 14. As determined with GPC method, the molecular weight Mn is 547, 000, Mw is 1,597, 000, and the molecular weight distribution index is 2.92.

### Example 15

3.5g of glycidyl methylacrylate, 810g of butanediol, 200g of glycolic acid, 166g of terephthalic acid, 584g of adipic acid, and 3g of tetrabutyl titanate are charged into a reaction vessel and stirred until being mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 4~8 hours to obtain polymer 15. As determined with GPC method, the molecular weight Mn is 547,000, and Mw is 1,597,000, and the molecular weight distribution index is 2.92.

### Example 16

5.7g of ally glycidyl ether, 810g of butanediol, 100g of polyethylene glycol, 100g of poly(lactic acid), 332g of terephthalic acid, 365g of adipic acid, 177g of succinic acid, and 3g of tetrabutyl titanate are charged into a reaction vessel and stirred until being mixed homogeneously, and heated to 200~250°C, and then the water produced in the esterification is collected. A supplement of 2g of tetrabutyl titanate is added until there is no water produced in the esterification, and the mixture is stirred until being mixed homogeneously. The pressure is reduced to 6000~30Pa and the mixture is allowed to react 3~6 hours to obtain A-16.

500g of component A-16 is added into a reaction vessel, and heated until it is melted. 0.5~3g of tert-butyl hydroperoxide is added, and stirred until being mixed homogeneously. Then the mixture is heated to 180~260°C and allowed to react for 0.2~4 hours to obtain polymer 16. As determined with GPC method, the molecular weight Mn is 872, 000, Mw is 2, 813, 000, and the molecular weight distribution index is 3.23.

### Example 17

The stretching tests of the polymers have followed GB-T17037.1-1997 to prepare standard samples with dumbbell shape, the length of which is 146mm, and the widths at both ends are 20mm, and the width in the parallel part in the center is 10mm, and the thickness is 4mm. According to the standard of the determination of plastic stretching properties in GB/T 1040-2006, the corresponding testing speed of flexible thermoplastic (type II) is 50mm/min, and the gauge length is 50mm. The test is carried on an electronic universal tensile force testing machine, and after setting the width and thickness of the testing sample, the corresponding data is recorded after the testing sample is broken.

The notch impact strength is determined by the standard GB/T 1843-2008/ISO 180:2000. The cut is made according to the mechanical process standard ISO2818.1994.

The properties of part of the polymers are as following:

| Sample | tensile strength, Mpa | elongation upon breaking, % | notch impact, KJ/m² |
|---|---|---|---|
| polymer 1 | 36 | 600~700 | NB |
| polymer 4 | 34 | >800 | NB |
| polymer 6 | 41 | >800 | NB |
| polymer 12 | 28 | >900 | NB |
| polymer 14 | 45 | 700~800 | NB |

### Example 18

Under the condition of controlled composting, the released amount of carbon dioxide released by the polymer is measured to determine the breaking down capacity of the final aerobes. The polymer is mixed with the culture soil, and introduced into a static composting container. The composting container is placed under the experimental condition of 58±2°C, and aerated with saturated, carbon dioxide-free air.

The aeration air is introduced into an absorption instrument containing NaOH. After absorbing with NaOH solution, the solved inorganic carbon is analyzed at regular intervals to give the totally released amount of carbon dioxide.

The composting container is shaken every week to avoid hardening and to make sure the microorganism contacts with the testing samples sufficiently.

The percentages of the degradation of part of the polymer testing samples are as following:

| | the percentages of the degradation % | | | | | |
|---|---|---|---|---|---|---|
| days | cellulose | polymer 5 | polymer 10 | polymer 12 | polymer 13 | polymer 16 |
| 0 | 0 | 0 | 0 | 0 | 0 | 0 |
| 30 | 35.58 | 17.43 | 19.42 | 18.73 | 18.23 | 17.45 |
| 60 | 85.35 | 43.21 | 46.71 | 46.89 | 45.46 | 43.72 |
| 90 | 88.32 | 62.39 | 67.41 | 68.92 | 68.29 | 63.43 |
| 120 | 90.42 | 76.78 | 79.48 | 78.21 | 79.32 | 76.96 |

## Claims

1. An aliphatic-aromatic copolyester, the polymeric monomers of which comprises:
(A) one or more compounds selected from aliphatic diacids, naphthenic diacids or the esters, anhydrides, acyl halides thereof;
(B) one or more compounds selected from aromatic diacids or the esters, anhydrides, acyl halides thereof;
(C) one or more compounds with two functional groups selected from amino groups, mercapto groups or hydroxyl groups; or the derivatives thereof with epoxy groups, nitrogen-containing heterocyclic rings or a sulfur-containing heterocyclic rings;
(D) one or more compounds selected from (D1) the unsaturated acids with at least one carbon-carbon, carbon-oxygen, carbon-nitrogen, or carbon-sulfur double bonds, carbon-carbon or carbon-nitrogen triple bonds or the esters, anhydrides, acyl halides thereof; or (D2) the unsaturated alcohols with at least one carbon-carbon double bonds or carbon-carbon triple bonds or the epoxides thereof;
the aliphatic-aromatic copolyester is prepared by mixing the foregoing polymeric monomers, followed by esterification, condensation polymerization reaction, then polymerizing, grafting and/or coupling the double bonds and/or triple bonds of the monomer with an initiating agent.

2. The aliphatic-aromatic copolyester according to claim 1, wherein the molar ratio of the hydroxyl groups, amino groups and/or carboxylic groups in the polymeric monomers is 0.5-5:1.

3. The aliphatic-aromatic copolyester according to claim 1 or 2, wherein the molar ratio of the said polymeric monomers (A), (B) and (D1) is (10~95) : (5~95) : (0~10) ; the molar ratio of the said polymeric monomers (C) and (D2) is (50~500) : (0~10); and the molar ratio of the molar sum of the said polymeric monomers (D1) and (D2) with the total amount of the said polymeric monomers in moles is (0.01~10) :100, more preferably (0.01~5) :100.

4. The aliphatic-aromatic copolyester according to any of claims 1 to 3, wherein the number average molecular weight of the aliphatic-aromatic copolyester is 10,000-200,000 g/mol, and the molecular weight distribution index is 1.1~5, more preferably 1.5~4.

5. The aliphatic-aromatic copolyester according to any of claims 1 to 4, wherein the melting point of the aliphatic-aromatic copolyester is 15~195°C, and the glass transition temperature is -80~120°C.

6. The aliphatic-aromatic copolyester according to any of claims 1 to 5, wherein the polymeric monomer (A) is selected from C₂~C₃₀ aliphatic diacids and C₅~C₂₀ naphthenic diacids, preferably selected from C₂~C₁₀ aliphatic diacids and C₅~C₁₀ naphthenic diacids, more preferably selected from C₂~C₆ aliphatic diacids and C₅~C₈ naphthenic diacids, such as one or more compounds selected from malonic acid, succinic acid, glutaric acid, adipic acid, pimelic acid, suberic acid, azelaic acid, sebacic acid, 2,3-dimethyl glutaric acid, diglycolic acid, 2,5-norbornane dicarboxylic acid, cyclohexane-1,3-dicarboxylic acid, cyclohexane-1,4-dicarboxylic acid or the esters, anhydrides, acyl halides thereof.

7. The aliphatic-aromatic copolyester according to any of claims 1 to 6, wherein the polymeric monomer (B) is selected from C₈~C₂₀ aromatic diacids, preferably selected form C₈~C₁₂ aromatic diacids, more preferably selected form C₈ aromatic diacids, such one or more of terephthalic acid, isophthalic acid, phthalic acid, biphenyl dicarboxylic acid, 2,6 - naphthalene dicarboxylic acid or 1,5-naphthalenedicarboxylic acid, or the esters, anhydrides, acyl halides thereof.

8. The aliphatic-aromatic copolyester according to any of claims 1 to 7, wherein the polymeric monomer (C) is one or more compounds selected from diols, amino alcohols, mercapto alcohols, mercapto amines, amino thiols, dithiols, diamine, or derivatives with epoxys, nitro heterocyclic rings, sulfuric heterocyclic rings thereof.

9. The aliphatic-aromatic copolyester according to any of claims 1 to 8, wherein the polymeric monomer (C) is selected from small molecule diols, preferably selected from C₂~C₃₀ straight chain or branched chain aliphatic diols, more preferably selected from C₂~C₁₀ straight chain or branched chain aliphatic diols, such as one or more compounds selected from ethylene glycol, 1,2-propanediol, 1,3-propanediol, 1,4-butanediol, 1,2-butanediol, hexanediol, cyclohexane-1,4-dimethanol, or cyclohexane-1,3-dimethanol; polyether diols, preferably selected from polyethylene glycol ethers, polypropylene ethers or polytetrahydrofuran ethers with a polymerization degree of 2~3000, more preferably selected from polyethylene glycol ethers with a polymerization degree of 2~200; polyester diols, preferably one or more compounds selected from the polyesters prepared with C₂~C₃₀ diacids and C₂~C₃₀ diols, more preferably one or more compounds selected from the polyesters prepared with C₂~C₁₀ diacids and C₂~C₂₀ diols with a polymerization degree of 1~10000.

10. The aliphatic-aromatic copolyester according to any of claims 1 to 9, wherein the polymeric monomer (D1) is selected from unsaturated acids with at least one carbon-carbon double bonds or carbon-carbon triple bonds, or the esters, anhydrides, acyl halides thereof, preferably selected from unsaturated acids with at least one carbon-carbon double bonds, or the esters, anhydrides, acyl halides thereof, such as one or more compounds selected from acrylic acid, acryloyl halide, methacrylic acid, dimethacrylic acid, vinyl benzoic acid, oleic acid, erucic acid, linoleic acid, linolenic acid, arachidonic acid, fumaric acid, maleic acid, itaconic acid, maleic anhydride, glycidyl acrylate, glycidyl oleate, monoethylene glycol acrylate or monoglyceryl acrylate.

11. The aliphatic-aromatic copolyester according to any of claims 1 to 10, wherein the polymeric monomer (D2) is selected from unsaturated alcohols with at least one carbon-carbon double bonds or the epoxy derivatives thereof, such as one or more compounds selected from allyl alcohol, oleic alcohol, mustard alcohol, allyl alkoxy polyether, allyl glycidyl ether, oleyl glycidyl ether, ally alkoxy glycidyl ether, oleyl glycidyl ether, ally monoglyceryl ester , or allyl glyceroether.

12. An aliphatic-aromatic copolyester according to any of claims 1 to 11, wherein the initiating agent is selected from compounds which is capable of initiating polymerization, grafting and/or coupling reactions of carbon-carbon, carbon-oxygen, carbon-nitrogen or carbon-sulfur double bonds, carbon-carbon or carbon-nitrogen triple bonds, such as azo compounds, peroxides, oxidation-reduction systems or oxygen, such as one or more compounds selected from azobis (dimethyl isobutyrate), azobis (isobutylamidine hydrochloride), azodicarbonamide, azobis(isobutylimdazole hydrochloride), azobis(cyclohexmethyl carbonitrile), azobis(cyanopentanoic acid), azobis(isbutyronitrile), benzoyl peroxide, 2,4-dichlorobenzoyl peroxide, diacetyl peroxide, dioctanoyl peroxide, dilauroyl peroxide, high energy particles which is capable of initiating the polymerization, grafting and/or coupling reactions of carbon-carbon, carbon-oxygen, carbon-nitrogen, or carbon-sulfur double bonds, carbon-carbon or carbon-nitrogen triple bonds, such as one or more selected from UV, visible light, plasma, x-ray, y-ray, heat or electric current, more preferably one or more agents selected from peroxides, azo compounds, UV or heat.

13. The aliphatic-aromatic copolyester according to any of claims 1 to 12, wherein the aliphatic-aromatic copolyester can further comprise (E), one or more compounds selected from hydroxyl acids, amino acids or the lactones, lactams, poly(hydroxy acids), poly(amino acids), such as lactic acid, glycolic acid, hydroxybutyric acid, hydroxyhexanoic acid, caprolactone, glycolide, lactide, lactide-co-glycolide, alanine or glutamic acid; polymers of hydroxyl acids and/or amino acids with a polymerization degree of 2~10000, such as poly(lactic acid), poly (hydroxyl acetic acid), polycaprolactone, lactic acid-hydroxyl acetic acid copolymer, lactic acid-caprolactone copolymer, hydroxyl acetic acid-caprolactone copolymer; polypeptides; proteins.

14. The aliphatic-aromatic copolyester according to claim 13, wherein the ratio of the weight of the polymeric monomer (E) and the weight sum of the above mentioned polymeric monomer is (0~50):100.

15. A method for preparing the aliphatic-aromatic copolyester according to any claims 1 to 14, which comprises steps as follows:
(1) mixing the polymeric monomer (A), (B), (C), (D) and optional (E) for esterification, condensation polymerization reactions,
(2) polymering, grafting and/or coupling reacting the double and/or triple bonds of the polymeric monomer (D) with the initiation an initiating agent.

16. The method according to claim 15, wherein the reaction of step (1) is carried out in the presence of catalysts and the reaction of step (2) is carried out in an extruder.

17. A use of the aliphatic-aromatic copolyester according to any of claims 1 to 14 in molding compounds, binders, paper materials and the products thereof, foaming materials, blends, film products or injection articles.
